# EUROPEAN PATENT SPECIFICATION

(11) **EP 1 885 509 B1**
(45) Date of publication and mention of the grant of the patent: **22.07.2009**
(21) Application number: 06742780.7
(22) Date of filing: 03.05.2006
(51) Int. Cl.: B05D 1/02, B29C 33/58

(54) **PROCESS FOR THE DEPOSITION OF MATERIALS ON A SURFACE**
VERFAHREN ZUM AUFBRINGEN VON MATERIALIEN AUF EINE FLÄCHE
PROCEDE DE DEPOT DE MATERIAUX SUR UNE SURFACE

(30) Priority: 04.05.2005 DE 102005020941
(43) Date of publication of application: 13.02.2008
(73) Proprietor: Linde Aktiengesellschaft, 80807 München (DE); Chem-Trend (Deutschland) GmbH, 82216 Maisach/Gernlinden (DE); Aksys GmbH, 86381 Krumbach (DE)
(72) Inventor: BERANEK, Jiri, 89331 Burgau (DE); BLANKE, Martin, 85521 Riemerling (DE); BOSCH, Axel, 86381 Krumbach (DE); FOCHLER, Manfred, 86441 Zusmarhausen/Gabelsbach (DE); KNÖCHEL, Friedrich-Wolfgang, 82239 Aling (DE); REBHAN, Dieter, 82538 Geretsried-Gelting (DE)
(86) International application number: PCT/EP2006/004128
(87) International publication number: WO 2006/117203

(56) References cited:
- EP-A- 0 609 540
- US-A- 5 106 650
- US-B1- 6 221 435

## Description

### TECHNICAL FIELD OF THE INVENTION

This invention relates generally to a process for the deposition of a material on a surface.

### BACKGROUND OF THE INVENTION

It is well known that the principal method of applying coatings to a surface has been to use organic solvents as a diluent and carrier. After the coating (diluted and/or carried by the organic solvent) has been applied in liquid form to a surface, the organic solvent vaporizes to leave the coating material on the surface. Unfortunately, it is also known that many organic solvents are hazardous, not only due to their flammability, but also due to their potential to cause environmental and health problems. Some are believed to be carcinogenic. These drawbacks, along with state and federal regulations restricting the use of organic solvents, have resulted in an intense search for alternatives.

Some of these alternatives have been all-powder spray coatings and water-based coatings. Each alternative has its limitations. There has also been promising results with the use of supercritical fluids as diluents and transport carriers, for example as described in United States patent no. 4,923,720, entitled "Supercritical Fluids as Diluents in liquid Spray Application of Coatings". Generally, as will be known to those of skill in the art, supercritical fluids are substances at a temperature and pressure above their thermodynamic critical point. They have the ability to diffuse through solids like a gas and dissolve materials like a liquid. They can readily change in density upon minor changes in temperature or pressure. These properties make them suitable as a substitute for organic solvents in many applications. Carbon dioxide is traditionally the most commonly used supercritical fluid.

United States Patent US 6,221,435 B1 discloses a method for the spray application of polymeric-containing liquid coating compositions using subcritical compressed fluids under choked flow spraying conditions. The subcritical compressed fluid is a gas at standard conditions of 0 C. temperature and one atmosphere pressure and is miscible with the coating composition.

To the present inventors' knowledge, however, no one has previously discovered that a particular range of subcritical fluids can be used quite effectively as a transport carrier for creating spray coatings. As will be explained more fully hereinafter, this range or envelope of subcritical temperatures and pressures has numerous advantages.

### SUMMARY OF THE INVENTION

In its broadest aspect, the present invention provides a process for the deposition of a material on a surface, said process comprising the steps of:
- providing a material to be deposited on said surface;
- providing a transport medium comprising liquid, subcritical carbon dioxide;
- combining said material and said transport medium to obtain a combination of said material and said transport medium;
- delivering said combination to said surface, wherein
- the ratio of said material to said transport medium ranges from 1:5 to 1:10.

As used herein all terms shall have their ordinary and customary meanings as used in the art (unless otherwise specified), and the described preferred embodiments are not intended to limit the full scope of the invention as recited in the claims.

The invention uses liquid carbon dioxide as a transport medium for the material to be deposited. Preferably the transport medium consists of liquid carbon dioxide. The liquid carbon dioxide immediately converts into the gaseous phase when being expanded and delivered to the surface. Thereby, the carbon dioxide breaks up the material into extraordinary fine particles and drops. Thus a nearly perfect atomization of the material is achieved. This results in a very homogeneous distribution of the material particles on the surface producing a coating layer of homogeneous thickness. By varying the ratio of carbon dioxide to material to be deposited the thickness of the material layer on the surface can be controlled. The carbon dioxide after having transported and distributed the material to the surface evaporates and disappears without any residue. This is in particular advantageous when food products shall be coated.

The inventive method has several advantages compared to the prior art. In particular, by using carbon dioxide it is not necessary to use hazardous solvents which might cause environmental or health problems and which induce a flammability risk.

The invention is preferably used to apply materials such as coatings with a thickness of below 3 mm, more preferably below 1 mm, preferably on a mold surface. In an especially preferred embodiment, the coatings are mold release agents having a layer thickness in the range of about 50 to about 500 micrometers.

Without wishing to be bound by any theory it is believed that the liquid carbon dioxide and the material to be delivered are homogeneously mixed and thus a fine distribution of the material is achieved when being sprayed. Using carbon dioxide that is in a liquid and subcritical state shows significant advantages. In particular, it is believed that the use of carbon dioxide in a liquid and subcritical form provides homogeneous mixing of a material to be delivered--such as a mold release agent--and the carbon dioxide, even if the material and the carbon dioxide are at different pressures, different temperatures and/or different flow rates. The solubility of the material in the carbon dioxide is considered to be of minor importance.

The relative amounts of carbon dioxide and the material which is to be delivered, preferably sprayed, onto the surface can be changed. Thus it is possible to vary the parameters, especially the thickness, of the layer of material to be deposited. Said material and said transport medium are combined in a predetermined ratio. The ratio of material to transport medium range from 1 : 5 to 1 : 10.

In order to avoid over-spray an electrical potential in the range of about 40 to about 85 kV is applied between the nozzle delivering that composition of carbon dioxide and material and the surface. Since carbon dioxide is a polar molecule it is possible to influence the spray characteristics by applying an electrical voltage.

Suitable coating materials for use with the present invention are numerous and may, for example, be organic or inorganic or mixtures thereof. Both thermosetting and thermoplastic polymers are useful in the present invention. Natural and synthetic polymers, as reactive pre-polymers, reactive monomers or as fully polymerized, may be used. As will be appreciated by those skilled in the art in light of this disclosure, suitable materials for use as coatings in the present invention will preferably not substantially degrade at the temperatures or pressures involved with their admixture with the subcritical fluid of the present invention. Preferred coating materials include vinyl polymers, acrylic polymers, styrenic polyesters, alkyds, polyurethanes, cellulosic esters such as acetate butyrate and nitrocellulose, amino resins such as urea formaldehyde, melamine formaldehyde and other aminoplast polymers and resins, and natural gums.

Other particularly preferred materials for use as coating materials in the present invention are waxes, polymers, resins, oils, silicon oils, and/or tensides. The coating material may preferably be mixed with water or a solvent which function as a film forming agent.

Tests have shown that, for an optimum transport medium, CO₂ should be used in its subcritical liquid state. The term "subcritical" means that at least one of temperature or pressure of the CO₂ is below the critical value, that is the temperature is below 31°C and/or the pressure is below 73,8 bar.

According to a preferred embodiment, the CO₂ pressure is in the range of about 20 bar to about 90 bar, more preferably between about 60 and about 80 bar. The CO₂ temperature is preferably below its critical value that is below 31°C, and is more preferably in the range of from about -20°C to about 25°C. It is to be understood that in a particular application values slightly outside these ranges may also be effective. In addition to acting as a transport medium, the CO₂ can also be used as a cooling agent to cool the surface which shall be coated. In that case the temperature of the CO₂ may be below -20°C. Such temperatures may be achieved by using a cooling unit or a heat exchanger to cool down the CO₂ before it is applied to the surface.

A cooling unit is in general advantageous since it can be used to control the temperature of the carbon dioxide and to assure that the temperature is below the critical temperature of CO₂. More preferable, the cooling unit is used to subcool the liquid carbon dioxide in order to make sure that only carbon dioxide in its liquid phase is present.

The invention can be used to deposit a material on numerous objects, such as metal, casting metal, glass, plastics, textiles, leather, food, drugs, pills, wood, furniture or any composite material. A preferred application of the invention is the coating of molds, for example molds made of metal, wood, plastic, gypsum or stone.

According to a preferred embodiment the transport medium stream further contains one or more additives selected from the group consisting of a solvent or a reactive compound, especially butane, propane, or dimethyl ether, and combinations thereof.

After the carbon dioxide and the material to be deposited, for example a release agent, have been brought together it is preferred to feed this combined stream through a static mixer in order to evenly distribute the material within the carbon dioxide.

While any number of surfaces can be coated in accordance with the teaching of the present invention, most preferred are interior surfaces of molds. The invention in this regard can be used effectively with resin transfer molding (RTM), vacuum molding, compression molding, and open molding techniques.

It will be appreciated by those of skill in the art that in one preferred embodiment of the present invention, the subcritical transport medium is used to apply coatings to the inside of mold surfaces wherein the coating combines with the molded article to form an outer surface of the molded article when ejected from the mold. This method is sometimes also referred to as in-mold coating.

The present inventors have found particular and unique advantages of the present invention in forming mold release coatings on the inside of mold cavities. Accordingly, it is preferably used to apply a release agent to the surface of a mold. Thereby, an article which is formed in the mold does not stick to the mold.

In one preferred embodiment, the present invention is first used with a mold release composition to line the mold cavity and then, utilizing a different coating composition in the inventive process, forming a coating on the mold release coating which adheres to the outer surface of the molded article.

The processes of the present invention will be described with reference to forming mold release coatings, it being understood that the nature of the coating material selected is the most important variable which differentiates between forming an outer coating on a molded article and forming a release coating which facilitates easy removal of a molded article from a mold (i.e., to allow an article formed in said mold to release without substantially sticking to said mold surface).

### BRIEF DESCRIPTION OF THE DRAWINGS

The invention as well as preferred details of the invention are described in the following with reference to the accompanying drawings. Herein schematically illustrates
- FIG. 1: a set up for coating a mold with a material in accordance with a preferred embodiment of the invention and;
- FIG. 2: a set up for coating a mold with a material in accordance with another preferred embodiment of the invention.

The following descriptions of various embodiments of the invention are meant to be exemplary only and are not intended to limit the scope of the invention, which is defined solely by the claims appended hereto.

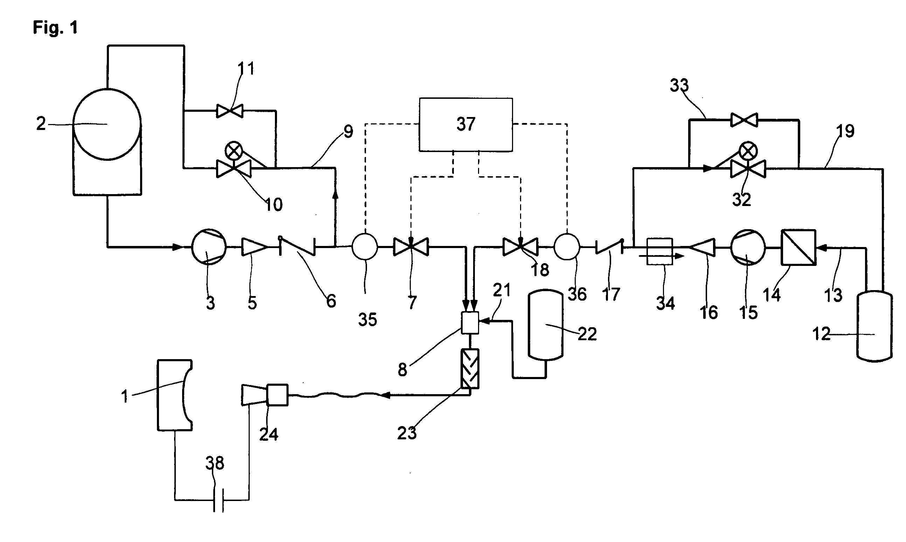

FIG. 1 illustrates schematically a device for depositing a coating formulation onto surface 1 in accordance with one preferred embodiment of the invention. A release agent is contained in reservoir tank 2 and can be withdrawn from it using a pump 3. Optionally reservoir tank 2 is pressurized. A wide variety of release agents are suitable for use in the present invention, preferably selected from the group consisting of resins, waxes and fats, oils, silicon oils, soaps and tensides. For example, and not to be deemed limiting, suitable release agents are high-molecular-weight fatty acid amides, glycerol esters, synthetic polyethylene-based low-molecular-weight polymers, waxes such as carnauba waxes, montan waxes, beeswax, and compositions formulated with wax, silicone and surfactant parting agents. Preferably the release agent in reservoir tank 2 includes a film forming agent, for example water or a solvent.

As will be appreciated in light of the present disclosure, the selection of a particular release agent will depend on a number of factors such as molding temperatures, pressures, mold residence time, and the materials used to form the molded article. Those skilled in the art will also recognize that the properties of waxes can be modified through various processes.

The release agent is most preferably brought through an optional reduction valve 5 and check valve 6 to precision control valve 7 that permits a metered introduction of the release agent into a pre-mixing chamber 8. In this illustrative embodiment, located upstream from precision control valve 7 is return conduit 9 with overflow valve 10 and bypass line 11. Accordingly, in one embodiment it is preferred that a portion of the release agent is continuously being pumped back into reservoir tank 2 through return conduit 9 so that, preferably, there is release agent present at precision control valve 7 at all times, thereby reducing the deadtime and lagtime involved in supplying release agent to mixer 8 and surface 1.

The transport of the transport medium or carrier fluid carbon dioxide is drawn from fluid tank 12 in which the carbon dioxide is preferably kept at a pressure of from about 15 bar to about 20 bar and at a temperature from about -35°C to about -20°C and has a purity ranging from technical grade to bulk grade. An alternative to fluid tank 12 for the supply of carbon dioxide can be a bundle of gas cylinders with an ascending pipe which allows to withdraw liquid CO₂.

Preferably, fluid carbon dioxide is drawn out of fluid tank 12 via extraction conduit 13 and filtered by filter 14, after which if flows to fluid pump 15. A centrifugal pump and a piston pump are examples of two suitable pumps for fluid pump 15, although other pumps may be suitable. The fluid carbon dioxide is thereby compressed to within the preferred range of subcritical pressure states, for example to 60 to 90 bar, and, for example, has a temperature of less than 25 °C. Via fluid pump 15 it is brought to dosing valve 18 through an optional reduction valve 16 and check valve 17. With the aid of dosing valve 18, the precise amount of carbon dioxide desired can be fed into pre-mixing chamber 8.

Heating coils or the like may be used in connection with extraction line 13 (or a heat controllable filter 14) to control temperature of the fluid carbon dioxide if necessary or desired. Preferably the CO₂ after being compressed is cooled down in a heat exchanger 34 by indirect heat exchange with a cooling medium. By cooling the carbon dioxide after compression it is guaranteed that the carbon dioxide is in its liquid state when entering the pre-mixing chamber 8. Preferably the carbon dioxide is subcooled in cooler 34.

Fluid pump 15 is preferably supplied with fluid at all times. For this reason, the compressed carbon dioxide is preferably recirculated into fluid tank 12 through ring line 19, which is equipped with overflow valve 32 and bypass 33. In one embodiment, ring line 19 thus preferably carries such a large stream of carbon dioxide that even at maximum capacity, i.e., when flow regulator 18 is feeding the maximum quantity of carbon dioxide into pre-mixing chamber 8, fluid carbon dioxide is returned to fluid tank 12. In another embodiment, fluid pump 15 is stopped when no CO₂ is needed and only started to maintain a particular CO₂ pressure, for example 70 bar.

The release agent (having a preferred viscosity of from about 50 centipoise (0,05 Pa s) to about 20000 centipoise (20 Pa s)) is preferably fed to the liquid subcritical carbon dioxide flowing into pre-mixing chamber 8. For release agents having a higher viscosity heating elements may be used to decrease the viscosity of the release agent. To accomplish this, the release agent is sprayed into pre-mixing chamber 8 and dispersed in the carbon dioxide stream. If desired, an additional substance in container 22, for example butane, propane or dimethyl ether, can also be sprayed into the carbon dioxide stream, via conduit 21.

The mixing of the release agent, or in general of the material, and the carbon dioxide can be carried out by continuously spraying the material into the carbon dioxide flow or by discontinuously mixing a predefined amount of material with a predefined amount of carbon dioxide.

The mixture of carbon dioxide, release agent and additional substance, if any, is most preferably mixed a second time in a static mixer 23 and subsequently sprayed onto surface 1 using spray nozzle 24 (for example, a nozzle, available from the Graco company). The pressure of the mixture of carbon dioxide and release agent at the nozzle 24 is about 80 bar. When the liquid carbon dioxide expands in spray nozzle 24, the release agent breaks up into small droplets that are evenly dispersed or entrained in the spray. As it is discharged from nozzle 24, the carbon dioxide then evaporates, leaving behind substantially no residue on surface 1.

The feed line for the release agent as well as the feed line for carbon dioxide are provided with flow meters 35, 36. Flow meters 35, 36 measure the amount of release agent and the amount of carbon dioxide and send corresponding signals to a control unit 37. Control unit 37 preferably controls control valve 7 and dosing valve 18 to provide a pre-determined ratio of carbon dioxide to release agent to the pre-mixing chamber 8.

Control valve 7 and/or dosing valve 18 are preferably designed a kind of as piston-pump which with each stroke feed a defined volume into pre-mixing chamber 8. By changing the speed of the piston-pump the average amount of carbon dioxide or release agent fed to the pre-mixing chamber 8 can be changed. The piston-pumps are for example driven by a hydrodynamic or hydrostatic drive which allow to feed a defined amount of carbon dioxide or material independent of their pressure or temperature.

To reduce over-spray an electrical voltage 38 of 40 to 85 kV is impressed between the nozzle 24 and the surface 1. Thereby, corners and holes of the surface can be easier reached. The applied voltage depends on the flow rate of carbon dioxide and release agent.

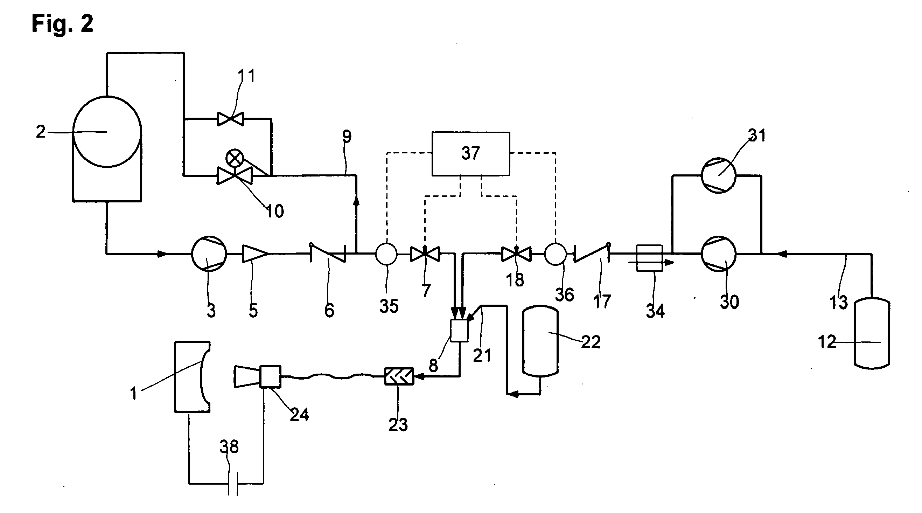

FIG. 2 illustrates another preferred arrangement for performing the process according to the present invention. Identical reference numbers refer to identical components in both figures.

The process shown in FIG. 2 differs from that in FIG. 1 in the way the subcritical carbon dioxide is supplied. Here too, in a preferred embodiment the carbon dioxide is preferably stored in fluid form in a fluid tank 12. However, this embodiment provides for a gas compressor 30 instead of fluid pump 15 for increasing the pressure of the transport medium. For reasons of redundancy, to enable the continuous supply of carbon dioxide in the event of a failure of gas compressor 30, most preferably it is useful to install a second gas compressor 31 in parallel with gas compressor 30.

Gas compressor 30 preferably runs only when spray nozzle 24 is in operation and fluid carbon dioxide is to be sprayed out. A return loop such as ring line 19 in the embodiment in FIG. 1 may not be necessary in this alternative preferred embodiment. In order to achieve a subcritical CO₂ temperature a cooler 34 is provided after compressor 30. The carbon dioxide transported with gas compressor 30 is fed into pre-mixing chamber 8, the release agent is admixed with the carbon dioxide, and the resulting release agent formulation is sprayed onto the mold via spray nozzle 24.

### Example:

The inventive process is utilized to form a mold release coating on the inside of a mold cavity having a temperature of about 60°C. 7 parts of liquid, sub-critical carbon dioxide at a temperature of about 20°C are mixed with 1 part of an active component consisting of 20% wax and 80% solvent as a film forming agent. That combination is sprayed onto the mold surface via a nozzle. The pressure of the combination of carbon dioxide and active component at the nozzle is about 80 bar. Thus a homogeneous layer of the active component is formed on the mold surface. Then a MDI-based cold cure foam formulation is introduced into the coated mold cavity and hardened. The resulting article can easily be released from the mold cavity without sticking to the mold surface.

## Claims

1. A process for the deposition of a material on a surface (1), said process comprising the steps of:
providing a material (2) to be deposited on said surface (1);
providing a transport medium comprising liquid, subcritical carbon dioxide (12);
combining said material (2) and said transport medium (12) to obtain a combination of said material (2) and said transport medium (12); and
delivering said combination to said surface (1)
**characterized in that**
the ratio of said material to said transport medium ranges from 1 : 5 to 1 : 10.

2. The process according to claim 1, wherein said material (2) to be deposited is a mold release agent.

3. The process according to claim 2, wherein said mold release agent is selected from the group consisting of resins, waxes, fats, oils, silicon oils, polymers, oligomers, soaps, tensides and combinations thereof.

4. The process according to claim 2 or 3, wherein said mold release agent comprises a film forming agent.

5. The process according to any of claims 1 to 4 wherein the transport medium (12) further comprises at least one additive selected from the group consisting of solvents, reactive compound, especially butane, propane, or dimethyl ether, and combinations thereof.

6. The process according to any of claims 1 to 5, wherein said surface (1) is a mold cavity.

7. The process according to claim 6 further comprising forming an article in said mold (1) such that said material forms an outer surface of said article.

8. The process according to any of claims 1 to 7, wherein said delivering said combination to said surface (1) comprises delivering the combination from a nozzle (24), and wherein the combination has a pressure at said nozzle (24) between about 20 and about 90 bars.

9. The process according to any of claims 1 to 8, further comprising flowing the combination through a static mixer (23).

10. The process according to any of claims 1 to 9, further comprising flowing said transport medium (12) through a liquid pump (15) or a gas compressor (30, 31).

11. The process according to any of claims 1 to 10, further comprising cooling said transport medium (12), preferably after being compressed or pumped.

12. The process according to any of claims 1 to 11, wherein said carbon dioxide (12) has a temperature of from about -20° to about 25°.

13. The process according to any of claims 1 to 12, wherein said delivering said combination to said surface (1) comprises delivering the combination from a nozzle (24) to said surface (1) and applying a voltage of between about 40kV and about 85kV between said nozzle (24) and said surface (1).

14. The process according to the combination of claims 1, 2 and 6, further comprising selecting a ratio of release agent (2) to liquid subcritical carbon dioxide (12) based on a desired thickness of said release agent (2) to be deposited on said mold (1), wherein said combining said release agent (2) and said liquid subcritical carbon dioxide (12) comprises combining said release agent (2) and said liquid subcritical carbon dioxide (12) in said ratio.

## Patentansprüche

1. Verfahren zum Abscheiden eines Materials auf einer Oberfläche (1), bei dem man ein auf der Oberfläche (1) abzuscheidendes Material (2) bereitstellt, ein flüssiges, unterkritisches Kohlendioxid (12) umfassendes Transportmedium bereitstellt, das Material (2) und das Transportmedium (12) zu einer Kombination aus Material (2) und Transportmedium (12) verbindet und die Kombination auf die Oberfläche (1) aufbringt, **dadurch gekennzeichnet, dass** das Verhältnis des Materials zum Transportmedium bei 1 zu 5 bis 1 zu 10 liegt.

2. Verfahren nach Anspruch 1, bei dem man als Material (2) ein Formtrennmittel abscheidet.

3. Verfahren nach Anspruch 2, bei dem das Formtrennmittel ausgewählt wird aus der Gruppe, bestehend aus Harzen, Wachsen, Fetten, Siliconölen, Polymeren, Oligomeren, Seifen, Tensiden und deren Kombinationen.

4. Verfahren nach Anspruch 2 oder 3, bei dem das Formtrennmittel einen Filmbildner umfasst.

5. Verfahren nach einem der Ansprüche 1 bis 4, bei dem das Transportmedium (12) ferner mindestens einen Zusatzstoff, ausgewählt aus der Gruppe, bestehend aus Solventien, reaktionsfähigen Verbindungen, insbesondere Butan, Propan oder Dimethylether, und deren Kombinationen, umfasst.

6. Verfahren nach einem der Ansprüche 1 bis 5, bei dem es sich bei der Oberfläche 1 um ein Formnest handelt.

7. Verfahren nach Anspruch 6, bei dem man ferner einen Gegenstand so in der Form (1) formt, dass das genannte Material eine äußere Oberfläche des Gegenstands bildet.

8. Verfahren nach einem der Ansprüche 1 bis 7, bei dem man die Kombination aus einer Düse (24) auf die Oberfläche (1) aufbringt und bei dem die Kombination einen Druck bei der Düse (24) zwischen etwa 20 und etwa 90 bar aufweist.

9. Verfahren nach einem der Ansprüche 1 bis 8, bei dem man ferner die Kombination über einen statischen Mixer (23) fließen lässt.

10. Verfahren nach einem der Ansprüche 1 bis 9, bei dem man ferner das Transportmedium (12) über eine Flüssigkeitspumpe (15) oder einen Gaskompressor fließen lässt.

11. Verfahren nach einem der Ansprüche 1 bis 10, bei dem man ferner das Transportmedium (12) kühlt, und zwar vorzugsweise nach dem Komprimieren beziehungsweise Umpumpen.

12. Verfahren nach einem der Ansprüche 1 bis 11, bei dem das Kohlendioxid (12) eine Temperatur von etwa -20° bis etwa 25° aufweist.

13. Verfahren nach einem der Ansprüche 1 bis 12, bei dem man die Kombination über eine Düse (24) auf die Oberfläche (12) aufbringt und dabei zwischen Düse (24) und Oberfläche (1) eine Spannung zwischen etwa 40 kV und etwa 85 kV anlegt.

14. Verfahren nach der Kombination der Ansprüche 1, 2 und 6, bei dem man ferner ein Verhältnis von Trennmittel (2) zu flüssigem unterkritischem Kohlendioxid (12) anhand einer erwünschten Dicke des auf der Form (1) abzuscheidenden Trennmittels (2) wählt, wobei man bei der Kombinationsbildung aus Trennmittel (2) und flüssigem unterkritischem Kohlendioxid (12) das Trennmittel (2) und das flüssige unterkritische Kohlendioxid (12) in dem genannten Verhältnis kombiniert.

## Revendications

1. Procédé pour le dépôt d'une matière sur une surface (1), ledit procédé comprenant les étapes consistant à :
se procurer une matière (2) à déposer sur ladite surface (1) ;
se procurer un milieu de transport comprenant du dioxyde de carbone liquide sous-critique (12) ;
combiner ladite matière (2) et ledit milieu de transport (12) pour obtenir une combinaison de ladite matière (2) et dudit milieu de transport (12) ; et
distribuer ladite combinaison sur ladite surface (1)
**caractérisé en ce que**
la proportion de ladite matière par rapport audit milieu de transport va de 1:5 à 1:10.

2. Procédé selon la revendication 1, dans lequel ladite matière (2) à déposer est un agent de démoulage.

3. Procédé selon la revendication 2, dans lequel ledit agent de démoulage est choisi dans le groupe constitué par les résines, les cires, les matières grasses, les huiles, les huiles de silicone, les polymères, les oligomères, les savons, les tensioactifs et les combinaisons de ceux-ci.

4. Procédé selon la revendication 2 ou 3, dans lequel ledit agent de démoulage comprend un agent filmogène.

5. Procédé selon l'une quelconque des revendications 1 à 4 dans lequel le milieu de transport (12) comprend en outre au moins un additif choisi dans le groupe constitué par les solvants, un composé réactif, en particulier le butane, le propane ou l'oxyde de diméthyle, et les combinaisons de ceux-ci.

6. Procédé selon l'une quelconque des revendications 1 à 5, dans lequel ladite surface (1) est une cavité de moule.

7. Procédé selon la revendication 6 comprenant en outre de former un article dans ledit moule (1) de façon à ce que ladite matière forme une surface externe dudit article.

8. Procédé selon l'une quelconque des revendications 1 à 7, dans lequel ladite distribution de ladite combinaison sur ladite surface (1) comprend de distribuer la combinaison à partir d'une buse (24), et dans lequel la combinaison a une pression au niveau de ladite buse (24) comprise entre environ 20 et environ 90 bars.

9. Procédé selon l'une quelconque des revendications 1 à 8, comprenant en outre de faire couler la combinaison dans un mélangeur statique (23).

10. Procédé selon l'une quelconque des revendications 1 à 9, comprenant en outre de faire couler ledit milieu de transport (12) dans une pompe à liquide (15) ou un compresseur de gaz (30, 31).

11. Procédé selon l'une quelconque des revendications 1 à 10, comprenant en outre de refroidir ledit milieu de transport (12), de préférence après qu'il a été comprimé ou pompé.

12. Procédé selon l'une quelconque des revendications 1 à 11, dans lequel ledit dioxyde de carbone (12) a une température allant d'environ -20° à environ 25°.

13. Procédé selon l'une quelconque des revendications 1 à 12, dans lequel ladite distribution de ladite combinaison sur ladite surface (1) comprend de distribuer la combinaison à partir d'une buse (24) sur ladite surface (1) et d'appliquer une tension comprise entre environ 40 kV et environ 85 kV entre ladite buse (24) et ladite surface (1).

14. Procédé selon la combinaison des revendications 1, 2 et 6, comprenant en outre de choisir une proportion de l'agent de démoulage (2) par rapport au dioxyde de carbone liquide sous-critique (12) sur la base d'une épaisseur souhaitée dudit agent de démoulage (2) à déposer sur ledit moule (1), dans lequel ladite combinaison dudit agent de démoulage (2) et dudit dioxyde de carbone liquide sous-critique (12) comprend de combiner ledit agent de démoulage (2) et ledit dioxyde de carbone liquide sous-critique (12) en ladite proportion.
